# EUROPEAN PATENT APPLICATION

(11) **EP 1 383 332 A1**
(43) Date of publication of application: **21.01.2004**
(21) Application number: 02722724.8
(22) Date of filing: 23.04.2002
(51) Int. Cl.: H04N 7/18, B60R 1/00, B60R 21/00

(54) **METHOD AND APPARATUS FOR DISPLAYING PICKUP IMAGE OF CAMERA INSTALLED IN VEHICLE**

(30) Priority: 24.04.2001 JP 2001126012
(71) Applicant: MATSUSHITA ELECTRIC INDUSTRIAL CO., LTD., Kadoma-shi, Osaka 571-0050 (JP)
(72) Inventor: MUTOBE, Etsumi, Sumida-ku, Tokyo 130-0015 (JP); MASUDA, Satoru, Yokohama-shi, Kanagawa 227-0055 (JP); MIMURA, Hidetoshi, Yokohama-shi, Kanagawa 246-0025 (JP); MIYAMA, Kazuki, Yokohama-shi, Kanagawa 223-0056 (JP)
(74) Representative: Holmes, Miles
(86) International application number: PCT/JP2002/004048
(87) International publication number: WO 2002/089485

(57) **Abstract**

When an image shot by a rear-view camera mounted on a vehicle (1a) is changed into an image viewed from the location of a virtual viewpoint, and the obtained image is displayed on a screen, warning lines (51) and (52), for conveying a warning to a driver of the presence of an object within range of the rear of a vehicle, are displayed by being superimposed on the image obtained by the viewpoint conversion. Thus, when an image obtained by the viewpoint conversion of an image shot by a rear-view camera is displayed on a screen, a driver can be apprised not only of the presence of an obstacle within range of a local vehicle but also of the erroneous image interpretation provided by the image obtained by the viewpoint conversion.

## Description

### Technical Field

The present invention relates to an image display method for a vehicle camera whereby an image, shot by a rear-view camera mounted on a vehicle, is displayed on the screen of a display device that a driver can view from the driver's seat, and an apparatus therefor. In particular, the present invention pertains to an image display method, for a vehicle camera, that is appropriate for warning a driver of the range within which a local vehicle is present when an image, obtained by changing the viewpoint of an original image to a virtual viewpoint, is displayed on a screen in order to permit the driver to visually identify the periphery of the vehicle, and an apparatus therefor.

### Background of the Invention

A vehicle that has become popular has an apparatus mounted on it whereby, when the vehicle is driven in reverse, an image obtained by a rear-view camera, at the back of the vehicle, is displayed on a car navigation screen a driver can view from the driver's seat to ensure it is safe to continue backing up. For the rear-view camera, a wide-angle lens is provided that is designed to shoot an image, which covers a wide range at the rear periphery of the vehicle and which can be displayed on a single screen, that can prevent the vehicle from being backed into an obstacle before it can be stopped.

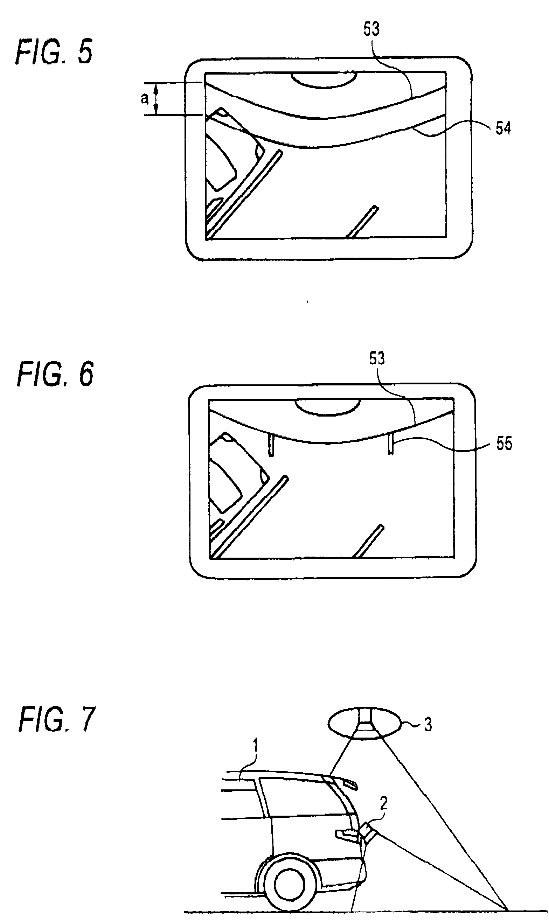

While an advantage of the wide-angle lens camera is that a picture covering a broad range can be shoot for display on a single screen, thereby extending the field of view, in actuality, the image that is displayed is distorted because a picture covering such a wide range must be compressed to fit on one screen, so that a sense of distance and direction is not easily obtained. Therefore, a technique has been proposed whereby, as is shown in Fig. 7, for example, an image shot by a rear-view camera 2 mounted on the rear of a vehicle 1 is converted into an image viewed from a virtual viewpoint 3 located above the rear of the vehicle, and that obtained image is displayed on the screen.

A conventional technique related to viewpoint conversion is described in JP-A-2000-229547, for example. According to the technique disclosed in this publication, a camera is used to shoot an image of the relative disposition of physical objects adjacent to the periphery of a vehicle, and while the vehicle is being parked, additional image data, representing the movement of the vehicle (an assumed movement pattern), are superimposed on a display of the image shot by the camera.

Since the image as viewed from the virtual viewpoint 3, which is obtained by converting an image shot by the rear-view camera, represents the top image of the rear portion of the vehicle, this image helps the driver to intuitively ascertain the peripheral disposition of physical objects and to steer the vehicle. However, the image obtained by the viewpoint conversion presents another problem.

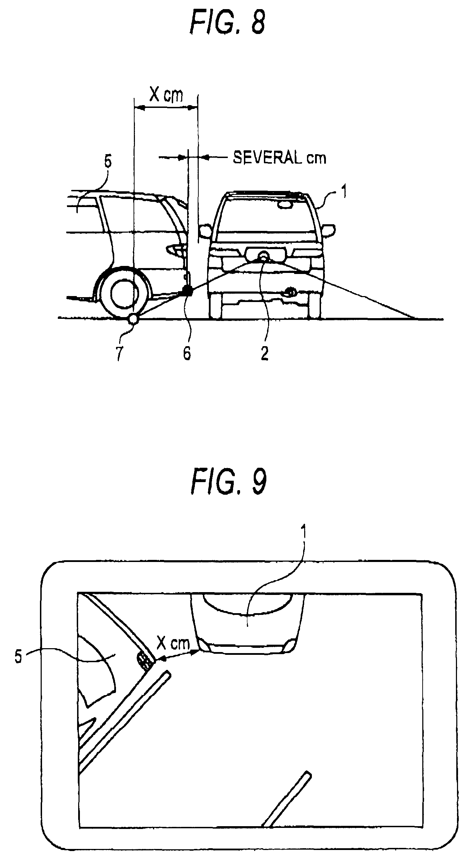

As is shown in Fig. 8, assume that a rear-view camera 2 attached to the rear of a local vehicle 1 is shooting a rear bumper 6 of an adjacent vehicle 5. Further, assume that a line is extended from the rear-view camera 2 to the image pickup point of the rear bumper 6 and to the ground, and the point thus reached is a point 7 whereat a tire contacts the ground. In addition, assume that the distance between the local vehicle 1 and the adjacent vehicle 5 is several cm, and the distance between the local vehicle 1 and the point 7 whereat the tire touches the ground is X cm (> the distance between the local vehicle 1 and the adjacent vehicle 5).

The rear-view camera 2 shoots an image while regarding as the same point the image pickup point for the rear bumper 6 of the adjacent vehicle 5 and the tire grounding point 7, and the image (Fig. 9) provided by the conversion of the viewpoint of the shot image is one in which the shot image is projected downward to the ground. Therefore, in Fig. 8, as the vehicle 1 nears the adjacent vehicle 5, the distance between the vehicles would at most be X cm. That is, for an obstacle located at a distance above the ground (the bumper 6 of the adjacent vehicle 5 in this example) the image is greatly distorted in the direction leading away from the local vehicle 1. Therefore, when the image obtained by the viewpoint conversion is displayed unchanged on the screen, the impression received by the driver may be that the obstacle is located farther away than it actually is.

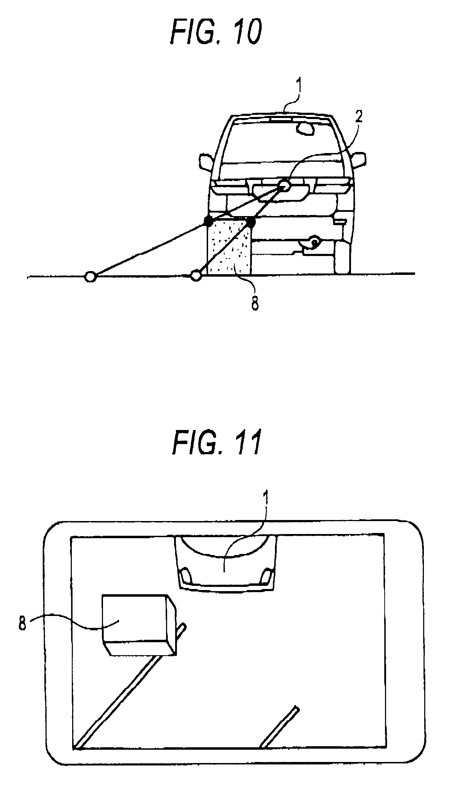

Similarly, as is shown in Fig. 10, when a hidden corrugated cardboard box 8 is located exactly at the left rear of a local vehicle 1, the image obtained by the viewpoint conversion of the image of the corrugated cardboard box 8 is as shown in Fig. 11. Therefore, when the image in Fig. 11 is displayed on the screen, it leads the driver to mistakenly believe that the obstacle 8 is located at a distance from the rear of the local vehicle 1, and thus, when the local vehicle is moved backward it strikes the obstacle 8.

### Disclosure of the Invention

It is one objective of the present invention to provide an image display method for a vehicle camera whereby, when an image obtained by the viewpoint conversion of an image shot by a rear-view camera is displayed on a screen, a driver can be accurately apprised of the range within which the rear of the local vehicle is present, and an apparatus therefor.

To achieve this objective, an image display method and an apparatus therefor are characterized by the display of a warning line, for delineating for a driver an area within range of a vehicle, that is superimposed on an image obtained by the viewpoint conversion of an image shot by a rear-view camera. By means of the warning, the driver can be prevented from receiving an erroneous impression from the image obtained by the viewpoint conversion.

Preferably, with the above configuration, an image for the warning line is prepared in advance in storage means. Thus, an image including the warning line can be displayed in real time as the circumstances related to a vehicle change.

Further, and preferably, when multiple virtual viewpoint positions are present for the viewpoint conversion, and when multiple mapping tables for viewpoint conversion are respectively prepared in correlation with the virtual viewpoint positions, warning line data for each of the mapping tables are prepared in advance in the storage means. With this configuration, an optimal image obtained by viewpoint conversion can be constantly provided for a driver, and the range within which a vehicle is present can be provided for the driver in correlation with each image obtained by viewpoint conversion. Further, when the warning line data are provided for individual vehicle models, optimal warning lines can be displayed that correspond to the sizes and the shapes of various vehicles.

### Brief Description of the Drawings

Fig. 1 is a diagram showing the configuration of an image display apparatus according to one embodiment of the present invention;
Fig. 2 is a flowchart showing the processing performed by the image display apparatus according to the embodiment of the present invention;
Fig. 3 is a diagram showing an example photograph wherein a vehicle warning line is displayed that is superimposed on an image obtained by a viewpoint conversion;
Fig. 4 is a diagram showing another vehicle warning line example;
Fig. 5 is a diagram showing an additional vehicle warning line example;
Fig. 6 is a diagram showing a further vehicle warning line example;
Fig. 7 is a diagram for explaining the viewpoint conversion;
Fig. 8 is a diagram showing the positional relationship existing between an adjacent vehicle and a rear-view camera;
Fig. 9 is a diagram showing an image obtained through the viewpoint conversion of an image shot by the rear-view camera in Fig. 8;
Fig. 10 is a diagram for explaining the location of an obstacle at the rear of a vehicle; and
Fig. 11 is a diagram showing an image obtained by the viewpoint conversion of the positional relationship in Fig. 10.

In the figures, the numeral 1 denotes a vehicle, 3 denotes a virtual viewpoint, 10 denotes an image display apparatus, 15 denotes a viewpoint selector, 17a and 17b denote vehicle cameras, 18 denotes a display device, 20 denotes CPU, 23a and 23b denote viewpoint conversion means, 24 denotes camera image synthesization means, 25 denotes warning line superimposition means, 30 denotes a memory (storage means), 31 denotes a vehicle warning line data table, 32 denotes a viewpoint conversion mapping table, 40 denotes table section means, and 50, 51, 52, 53, 54 and 55 denote warning lines.

### Best Mode for Carrying Out the Invention

One embodiment of the present invention will now be described while referring to the accompanying drawings.

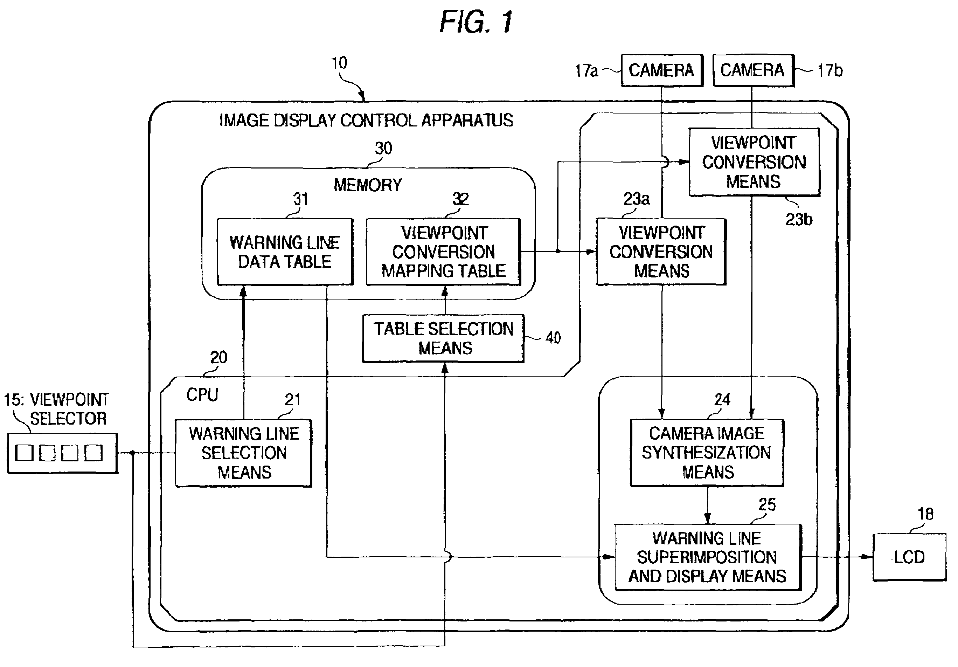

Fig. 1 is a diagram showing the configuration of an image display apparatus for a vehicle camera according to the embodiment of the present invention. An image display apparatus 10 includes: a CPU 20, a memory (storage means) 30 and table selectionmeans 40. Aviewpoint selector 15, which is provided at a driver's seat and receives from a driver a viewpoint change instruction, two rear-view vehicle cameras 17a and 17b, and a car navigation liquid crystal display device 18 are connected to the image display apparatus 10. In this embodiment, two rear-view cameras are respectively mounted on the sides of the vehicle at the rear, and the images obtained by these cameras are synthesized. Therefore, compared with the case wherein a single rear-view camera is mounted at the center rear of a vehicle, as is shown in Fig. 10, the distortion of an image obtained by viewpoint conversion can be reduced.

When each special program is executed, the CPU 20 functions as warning line selection means 21, for selecting vehicle warning line data based on a signal received from the viewpoint selector 15, or as viewpoint conversion means 23a and 23b, for performing the viewpoint conversion of images obtained by the vehicle rear-view cameras 17a and 17b, or as camera image synthesization means 24, for synthesizing images obtained by the vehicle rear-view cameras 17a and 17b, or as warning line superimposition means 25, for superimposing a vehicle warning line image on a camera image.

A vehicle warning line data table 31 and a viewpoint conversion mapping table 32 are stored in the memory 30. Stored in advance in the vehicle warning line data table 31 is data for drawing a warning line (auxiliary line), superimposed on an image obtained by viewpoint conversion, for conveying a warning to a user of objects within range of the local vehicle.

In this embodiment, the vehicle warning line is displayed while superimposed on an image obtainedbyviewpoint conversion. And the position of the virtual viewpoint can be changed not only to the top viewpoint position immediately at the center rear of a vehicle, but also to a top viewpoint position obliquely to the right rear, or to a top viewpoint position obliquely to the left rear and so on. When the virtual viewpoint differs, the vehicle warning line image, which is to be superimposed on an image viewed from each virtual viewpoint, must be changed.

Therefore, in this embodiment, vehicle warning line data is prepared for each virtual viewpoint, and the warning line selection means 21 selects the vehicle warning line data based on a corresponding signal received from the viewpoint selector 5.

The viewpoint conversionmapping table 32 is used to change the coordinates of an image (the actual image) shot by a camera. Since much calculation time is required for the coordinate conversion processing and it is difficult to present a screen display in a real time, the coordinate conversion mapping table is prepared in advance and pixel data for the real image is rearranged on the mapping table, so that a desired image can be obtained through viewpoint conversion, This mapping table is provided for each virtual viewpoint position, and the vehicle warning line data is prepared for each mapping table.

The table selection means 40 employs a selection signal emitted by the viewpoint selector 5 to select one of the mapping tables that have been prepared for the individual virtual viewpoints. The viewpoint conversion means 23a and 23b then employ the mapping table selected by the table selection means 40 to rearrange the pixel data for the real images shot by the cameras 17a and 17b, and to create and output the images obtained by the viewpoint conversion.

The camera image synthesization means 24 synthesizes the image obtained by the viewpoint conversion means 23a through viewpoint conversion of the right rear image of the vehicle shot by the camera 17a, and the image obtained by the viewpoint conversion means 23b through viewpoint conversion of the left rear image of the vehicle shot by the camera 17b, and creates a single image at wide right and left angles.

The warning line superimposition means 25 superimposes the vehicle warning line data, read from the vehicle warning line data table 31, on the image output by the camera image synthesization means 24, and outputs the superimposed image to the display device 18.

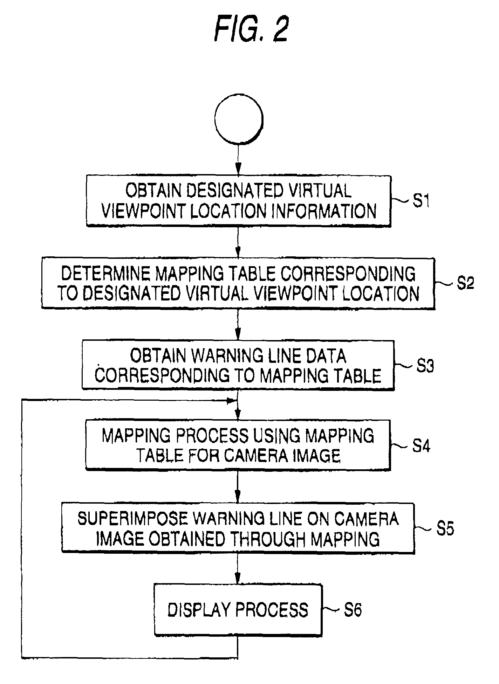

Fig. 2 is a flowchart showing the processing performed by the image display device according to the embodiment. The processing in Fig. 2 is initiated when the driver turns on the viewpoint selector 15 installed at the driver's seat, or when the driver manipulates the switch for the viewpoint selector 15 to alter the virtual viewpoint position. First, in the processing, information representing a virtual viewpoint position desired (designated) by the driver is obtained based on a switch signal that activates the selection (step S1).

At step S2, a pertinent viewpoint conversion mapping table is determined based on the virtual viewpoint position information. At step S3, the vehicle warning line data corresponding to the mapping table determined at step S2 is read from the warning line data table 31 in the memory 30.

At step S4, the individual pixels of the real image shot by the camera are rearranged on the mapping table determined at step S2 to create an image through viewpoint conversion, and the line image for the vehicle warning line is superimposed on this obtained image (step S5). The resultant image is then transmitted to the display device 18 and is displayed on the screen (step S6).

After the image has been displayed on the screen, program control returns to step S4. Since the vehicle is gradually moving backward and the image shot by the camera is also being gradually changed, the processing at steps S4 to S6 is repeated, so that the image can be displayed in real time, in correspondence with the change in the image shot by the camera.

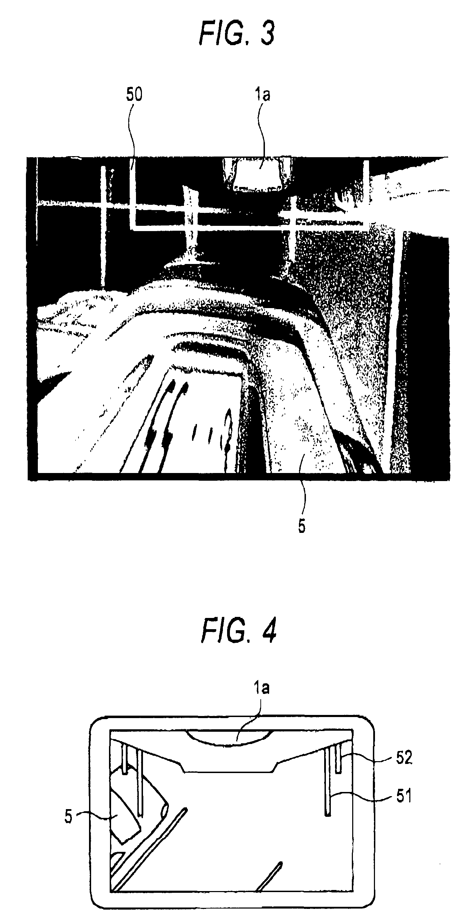

Fig. 3 is a photograph according to the embodiment representing an image obtained by viewpoint conversion, with a superimposed warning line. In Fig. 3, illustration data 1a for a local vehicle is displayed with a greatly distorted image of an adjacent vehicle 5 (since usually the image of a local vehicle is not viewedby the vehicle camera, illustration data are synthesized with the image obtained by viewpoint conversion, and the synthesized image is displayed). In Fig. 3, the image obtained by viewpoint conversion of a real image is shown, and on the screen, the license plate attached to the bumper of the adjacent vehicle 5 is greatly distorted.

According to the embodiment, a warning line 50 that is displayed has the appearance of a horseshoe shaped frame, and encloses the illustration data 1a for the local vehicle. In the example in Fig. 3, the width of the warning line 50 is 2 to 2.5 times the width of a partition line in a parking space, and a satisfactory distance from the rear end of the illustration data 1a is obtained.

The warning line 50 can be easily distinguished from others by altering the display method, including using a blinking or a red display. When the image of an obstacle nears the warning line 50, for example, the speed of the blinking can be increased or the red and a black display can be alternately shown, to request that the driver, instead of simply accepting the view on the screen, confirm what is happening with his or her own eyes. Further, a character message, such as "Get out to confirm" may be displayed on the screen.

An arbitrary shape can be employed for the warning line 50, and since depending on the vehicle model the rear shape differs, optimal warning line data should be prepared that is suitable for each model type. Fig, 4 is a diagram showing another warning line shape example. In Fig. 4, in the widthwise direction, two first, bar-shaped warning lines 51 are provided at set intervals and two second warning lines 52 are further provided at set intervals. The first warning lines 51 indicate the width of the body of a local vehicle, and the second warning lines 52 indicate the positions of side mirrors.

Fig. 5 is a diagram showing an additional warning line example. In Fig. 5, the image of a vehicle body (the location of the bumper of a local vehicle) is displayed using a wider warning line 53, and an auxiliary line (a second warning line) 54 is displayed at a predetermined distance a from the warning line 53.

Fig. 6 is a diagram showing a further warning line example. In Fig. 6, warning lines 55, corresponding to the side mirrors, explained while referring to Fig. 4, are displayed instead of the second warning line 54 in Fig. 5.

Various warning line examples are shown in Figs. 3 to 6. However, since the warning line type depends on the external structure of the vehicle, an optimal warning line shape is determined and is stored in advance in the memory 30. The camera may be attached either at the front or on the side, and the warning line type is not affected by the positioning of the camera.

As is described above, in this embodiment, the warning line is displayed on the image obtained by viewpoint conversion to warn the driver of the erroneous interpretation of this image. Therefore, it is possible to call the driver' s attention to an obstacle at the rear of a local vehicle and the distance between the obstacle and the local vehicle.

The present invention has been explained in detail by referring to a specific embodiment. However, it would be apparent to one having ordinary skill in the art that the present invention can be variously changed or modified without departing from the spirit and scope of the invention.

The present application is based on Japanese Patent Application No. 2001-126012 filed on April 24, 2001, and the content thereof is referred to and taken in here.

### Industrial Applicability

According to the present invention, when an image obtained by the viewpoint conversion of an image shot by a rear-view camera is displayed on a screen, a driver can be warned that there is an obstacle within range of the rear of a local vehicle.

## Claims

1. An image display method for a vehicle camera comprising the step of:
displaying a warning line, for delineating for a driver a presence range of a vehicle, that is superimposed on an image obtained by the viewpoint conversion of an image shot by a rear-view camera.

2. The image display method according to claim 1, wherein an image for said warning line is prepared in advance in storage means.

3. The image display method according to claim 1 or 2,
wherein, when a plurality of virtual viewpoint positions are present for said viewpoint conversion, and when a plurality of mapping tables for viewpoint conversion are respectively prepared in correlation with said virtual viewpoint positions, warning line data for each of said mapping tables are prepared in advance in said storage means.

4. The image display method according to any one of claims 1 through 3, wherein said warning line data are provided for individual vehicle models.

5. An image display apparatus for a vehicle camera comprising:
a viewpoint conversion unit for generating an image obtained by the viewpoint conversion of an image shot by a rear-view camera; and
a warning line superimposition and display unit for displaying a warning line, for delineating for a driver a presence range of a vehicle, that is superimposed on said image.

6. The image display apparatus according to claim 5, further comprising storage means in which an image for said warning line is prepared in advance.

7. The image display apparatus according to claim 5 or 6,
wherein a plurality of virtual viewpoint positions are present for said viewpoint conversion,
wherein a plurality of mapping tables for viewpoint conversion are respectively prepared in said storage means in correlation with said virtual viewpoint positions,
wherein warning line data for each of said mapping tables are prepared in advance in said storage means.

8. The image display apparatus according to any one of claims 5 through 7, wherein said warning line data are provided for individual vehicle models.
